# EUROPEAN PATENT APPLICATION

(11) **EP 2 143 586 A1**
(43) Date of publication of application: **13.01.2010**
(21) Application number: 08021801.9
(22) Date of filing: 16.12.2008
(51) Int. Cl.: B60K 37/02, B60Q 3/04

(54) **Instrument board with a natural light source**

(30) Priority: 07.07.2008 DE 102008031568
(71) Applicant: Johnson Controls GmbH, 51399 Burscheid (DE)
(72) Inventor: Ringenwald, Joffrey, 50858 Köln (DE); Alliot, Patrick, 78230 Le Pecq (FR); Schmitz, Ingo, 53639 Königswinter (DE); Süss, Manfred, 75196 Remchingen (DE); Dreisbach, Volker, 50931 Köln (DE)
(74) Representative: Wolff, Felix

(57) **Abstract**

The present invention is directed to an instrument panel (1) with an instrument board (2) with a front side (2') and a rear side (2''), the rear side being illuminated with natural light (6).

## Description

The present invention is directed to an instrument panel with an instrument board with a front side and a rear side.

Such instrument panels are very well known to a person skilled in the art and may comprise analog or digital displays, which inform the vehicle occupant about the status of the vehicle for example its velocity, the speed of rotation of the motor, the motor temperature, but also information about the infotainment system of the car, the navigation system or from a board computer. Furthermore, the instrument board can comprise symbols that also provide information about the status of the car. Such instrument boards are normally located in the dashboard of a car. Usually, these instrument boards are lighted from the back with an artificial light source in order to improve the visibility of the various displays.

It was the problem of the present invention to provide a more energy-efficient instrument panel, that can be easily produced and that has little or no maintenance.

The problem is solved with an instrument panel with an instrument board with a front side and a rear side, whereas the rear side is illuminated with natural light, e.g. daylight.

The present invention is directed to an instrument panel with an instrument board. This instrument panel comprises at least one preferably more displays. This instrument board is preferably at least partially and at least locally transparent for natural and/or artificial light. This instrument board comprises a front side which is directed towards the occupant of the vehicle and a rear side which faces towards the chassis of the car.

According to the present invention, the instrument board is illuminated with natural light, e.g. daylight. Thus, during daytime, no artificial light is needed to improve the visibility of the instrument board. Thus, the instrument panel according to the present invention is more energy efficient and requires less maintenance, because no artificial light source needs to be energized and/or replaced more.

Preferably, the instrument board is located in a dashboard, which comprises a recess as an inlet for the natural light. This natural light either directly beams towards the rear side of the instrument board and/or is directed towards the instrument board with a light duct, for example optical fibers, or reflection-means, like mirrors, or the like to direct the light towards the instrument board.

Preferably, the instrument board comprises means to bundle the natural light to improve its intensity and/or split the natural light to light more spots on the instrument board.

Preferably, the light is split into two or more wavelength(s), for example with a prism to light the instrument board with different colors.

Preferably, the instrument panel comprises an additional artificial light source, especially a LED or an OLED. This additional light source is utilized in cases that the natural light is not sufficient to illuminate the instrument board.

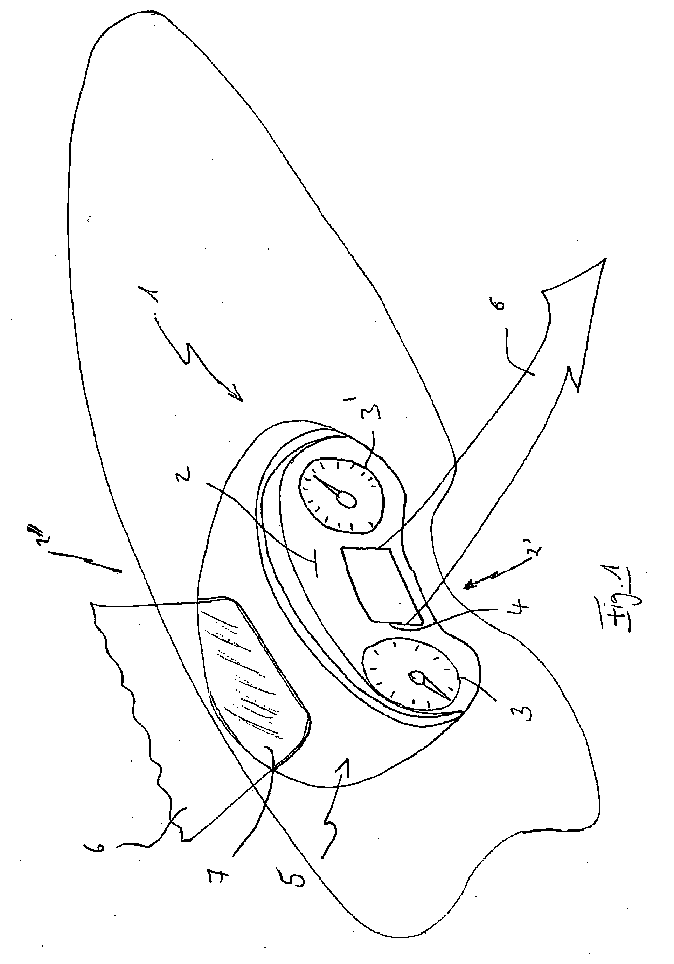

The invention is now explained according to the single figure 1. This explanation does not limit the scope of protection.

Figure 1 shows the inventive instrument panel, which comprises an instrument board 2, which is located in a dashboard 5. The instrument board 2 comprises to analog-instruments 3, 3' and a transparent display 4. Furthermore, the instrument board comprises a front side 2' which is oriented towards the occupant of the vehicle and a rear side to 2" which is directed towards the chassis of the vehicle. In the dashboard 5 a recess 7 is inserted as an inlet for the natural light 6. This natural light 6 then directly beams towards the rear side 2" of the instrument board 2 or is directed with a light duct for example optical fibers and or reflection-means for example a mirror towards the rear side 2" of the instrument board 2. The person skilled in the art understands that the recess 7 can be covered with a transparent cover.

Furthermore, the inventive instrument panel preferably comprises artificial light-means, which are located preferably inside the dashboard, which is utilized in cases that the natural light, e.g. daylight is not sufficient.

The person skilled in the art understands, that the inlet for the light 6 can be anywhere and that this light is directed with ducts or reflection-means towards the rear side 2" of the instrument board 2.

### Reference signs:

- 1: Instrument panel
- 2: Instrument board
- 3: Analog display
- 3': Analog display
- 4: Transparent Display
- 5: Dashboard
- 6: Natural light, day light
- 7: Recess

## Claims

1. Instrument panel (1), with an instrument board (2) with a front side (2') and a rear side (2"), **characterized in, that** the rear side (2") is illuminated with natural light (6).

2. Instrument panel (1) according to claim 1, **characterized in, that** the instrument board (2) is located in a dashboard (5), which has a recess (7) as an inlet for the natural light (6).

3. Instrument panel according to one of the preceding claims, **characterized in, that** it comprises a light-duct or refection means to direct the light towards the instrument board (2).

4. Instrument panel according to one of the preceding claims, **characterized in, that** it comprises an additional light source, especially and LED or an OLED.
